# EUROPÄISCHE PATENTANMELDUNG

(11) **EP 2 754 543 A1**
(43) Veröffentlichungstag der Anmeldung: **16.07.2014**
(21) Anmeldenummer: 14000096.9
(22) Anmeldetag: 13.01.2014
(51) Int. Cl.: B29C 33/04, B29C 45/73, B29C 33/76

(54) **Formkern, Formeinsatz und Formwerkzeug zum Herstellen von Formteilen**

(30) Priorität: 11.01.2013 DE 102013100277
(71) Anmelder: Glas, Friedrich, 82538 Geretsried (DE)
(72) Erfinder: Glas, Friedrich, 82538 Geretsried (DE)
(74) Vertreter: Heitzer, Christian

(57) **Zusammenfassung**

Die vorliegende Erfindung betrifft einen Formkern, einen Formeinsatz und ein Formwerkzeug zum Fertigen von Formteilen, insbesondere im Spritzguss- oder Druckgussverfahren. Der Formkern dient zum Formen von inneren Konturen von Formteilen und umfasst einen Innenkern, einen Außenkern, die miteinander verbindbar sind, Strömungselemente und zumindest einen ersten Temperierkreis zum Transport eines fluiden Mediums zur Wärmeabfuhr und/oder Wärmezufuhr.

## Beschreibung

### 1. Technisches Gebiet

Die Erfindung betrifft ein Formwerkzeug, einen Formkern und einen Formeinsatz zum Herstellen von Formteilen und Werkstücken aus Kunststoffen und/oder Metalllegierungen in einem Spritzguss-Werkzeug und/oder aus Metalllegierungen in einem Druckguss-Werkzeug sowie ein Verfahren zum Optimieren der Qualität und Zykluszeit von Formteilen und Werkstücken beim Spritz- und/oder Druckgießen.

### 2. Stand der Technik

Formteile werden häufig im Spritzguss- oder Druckgussverfahren hergestellt. Zur Herstellung werden Metallformen benötigt, die einen Formkern, der die Innenform des herzustellenden Formteils bildet, und einen Formeinsatz, der das Negativ der Außenform des herzustellenden Formteils bildet, umfassen. Der Formkern und der Formeinsatz bilden gemeinsam einen Hohlraum aus, in dem eine Formmasse eingespritzt bzw. eingepresst werden kann. Zur rationellen Herstellung von Formteilen werden oft Formen benutzt, die mehrere Hohlräume und eine entsprechende Anzahl an Formkernen umfassen, die auf einer gemeinsamen Platte angeordnet sind.

In der Praxis besteht ein Bedarf an Formwerkzeugen, Formkernen und/oder Formeinsätzen, die über den gesamten Lebenszyklus und die Einsatzdauer hinweg produktionssicher funktionieren, d.h. eine hohe Standzeit aufweisen und die es ermöglichen, Formteile, insbesondere Spritzgussformteile oder Druckgussformteile, in kürzest möglicher Zykluszeit herzustellen. Ein wichtiger Faktor ist die Reduzierung der Abkühl- und damit der Zykluszeit durch die Platzierung von Kühlkanälen in den Formwerkzeugen, Formkernen und/oder Formeinsätzen.

Üblicherweise sind Mittel zum Kühlen eines Formwerkzeuges vorgesehen. Eine Formschmelze, die in Formhohlräume eingebracht werden soll, muss zum Verfestigen gekühlt werden. Der Abkühlvorgang soll einerseits zur Verkürzung der Zykluszeiten so schnell wie möglich erfolgen, andererseits muss gewährleistet werden, dass die Formschmelze in alle Formhohlräume eindringt. Zum Kühlen der Formschmelze werden häufig in der Außenfläche des Formeinsatzes Kühlkanäle vorgesehen.

Bei der Herstellung von länglichen Spritzguss-Formteilen wie beispielsweise Spritzenzylindern, Tablettenröhrchen, Kugelschreiberhülsen, Lippenstiftgehäusen, Trinkbehältern und dergleichen besteht ein Bedarf an Formwerkzeugen, Formkernen und/oder Formeinsätzen, bei denen zum einen die beim Spritzgussvorgang auftretende Prozesswärme möglichst effizient, gleichmäßig und schnell abgeführt werden kann. Zum anderen ist es insbesondere für die Qualität der Spritzguss-Formteile von Vorteil, wenn die Oberflächenwandtemperatur des Formhohlraumes im Wesentlichen entlang der gesamten Länge des Spritzguss-Formteiles gleichmäßig konstant abnimmt.

Weiterhin ist es wünschenswert, dass die im Einsatz befindlichen Formwerkzeuge, Formkerne und/oder Formeinsätze eine hohe Verschleißbeständigkeit aufweisen, um eine sichere, störungsfreie und hohe Produktionsstandzeit bereitstellen zu können. In der Praxis werden unterschiedliche Werkstoffe für Formwerkzeuge, Formkerne und/oder Formeinsätze verwendet. Beispielsweise werden gehärtete Werkzeugstähle als Werkstoff für Formwerkzeuge, Formkerne und/oder Formeinsätze eingesetzt, die eine hohe Stabilität und Verschleißbeständigkeit aufweisen und kostengünstig herstellbar sind. Nachteilig ist jedoch, dass gehärtete Werkzeugstähle insbesondere eine niedrige Wärmeleitfähigkeit und ineffiziente Temperierung aufweisen. Die Verwendung von Kupferlegierungen als Werkstoff für Formwerkzeuge, Formkerne und/oder Formeinsätze hat den Vorteil, dass Korrosion vermieden und eine hohe Wärmeleitfähigkeit und effiziente Kühlung bereitgestellt werden kann. Nachteilig ist jedoch, dass Bauteile aus Kupferlegierungen eine geringe Stabilität aufweisen. Insbesondere ist bei unsachgemäßer Verwendung eine erhöhte Verschleißanfälligkeit durch die niedrigere Härte als der von Werkzeugstahl gegeben und das Material ist teurer als Werkzeugstahl.

In der Praxis besteht insbesondere bei der Herstellung von langen, schmalen und dünnwandigen Formteilen ein Bedarf an Formwerkzeugen, Formkernen und/oder Formeinsätzen, die die Zykluszeiten reduzieren und gleichzeitig die Qualität der Oberflächen sowie die Maßgenauigkeit optimieren. Problematisch ist insbesondere, dass für einen effektiven Wärmetransport über die gesamte Länge der länglichen, dünnwandigen Formteile nur wenig Platz zur Verfügung steht, wenn gleichzeitig entsprechende Festigkeitsanforderungen an Formkerne und/oder Formeinsätze bei der Herstellung solcher Formteile einzuhalten sind.

Typische beispielhafte Abmessungen von Formteilen sind in der nachfolgenden Tabelle wiedergegeben:

| Anwendung Formteil | Länge L in mm | Durchmesser D in mm | Formfaktor L/D | Wandstärke in mm |
|---|---|---|---|---|
| Pilsglas | 180 | 60 | 3:1 | 1,0 |
| Bierglas | 155 | 80 | 1,9:1 | 2,0 |
| Spritzenzylinder | 70 | 15 | 4,7:1 | 0,8 |
| Schreibstiftgehäuse | 100 | 8 | 12,5;1 | 0,8 |
| Tablettenröhrchen | 160 | 28 | 5,7:1 | 0,8 |
| Kunststoffröhrchen | 220 | 15,8 | 13,9:1 | 0,8 |
| Wassertank Espressomaschine | 200 | 78 | 2,6:1 | 2,5 |

Der vorliegenden Erfindung liegt daher die Aufgabe zugrunde, einen Formkern, einen Formeinsatz und ein Formwerkzeug bereitzustellen, mit denen insbesondere die Nachteile des Standes der Technik überwunden werden können, die die Spritzguss- und/oder Druckguss-Formteile in kürzest möglicher Zykluszeit herstellen können und die über den gesamten Einsatz hinweg produktionssicher funktionieren. Weiterhin sollen Spritzguss- und/oder Druckguss-Formteile mit einer hohen optischen Qualität hergestellt werden können, wobei das Verfahren die Herstellung von Formteilen sicher und zeit- und kosteneffektiv ermöglichen soll. Ferner soll ein Formwerkzeug, das einen Formkern und einen Formeinsatz umfasst, über die gesamte Länge eines Formteils einen im Wesentlichen gleichmäßigen Wärmeaustausch bereitstellen.

### 3. Zusammenfassung der Erfindung

Die vorliegende Erfindung löst die Aufgabe durch einen Formkern gemäß dem unabhängigen Anspruch 1, einen Formeinsatz gemäß dem unabhängigen Anspruch 13 und ein Formwerkzeug gemäß dem unabhängigen Anspruch 22. Bevorzugte Ausführungsformen finden sich in den abhängigen Ansprüchen.

Durch die erfindungsgemäße Lösung wird ein Formkern zum Formen von inneren Konturen von Formteilen bereitgestellt, der einen Innenkern, einen Außenkern, der mit dem Innenkern verbindbar ist, und Strömungselemente umfasst. Die Strömungselemente sind zwischen dem Innenkern und dem Außenkern zum Ausbilden eines ersten Temperierkreises anordenbar. Der erste Temperierkreis weist einen ersten Temperierkanal zum Transport eines fluiden Mediums zur Wärmeabfuhr und/oder Wärmezufuhr auf.

Durch diese Ausgestaltung kann vorteilhafter Weise bei gleichzeitiger Optimierung der Spritzteilqualität die Zykluszeit erheblich reduziert werden. Um dies zu erreichen weist der Werkstoff des Außenkerns, der die innere Wand eines Formhohlraumes bzw. einer Kavität bildet, vorteilhafter Weise eine hohe bis sehr hohe Wärmeleitfähigkeit auf, um die entstehende Prozesswärme schnell und möglichst gleichmäßig abzuführen. Das fluide Medium kann zum Erwärmen, d.h. zur Wärmezufuhr, oder zum Abkühlen, d.h. Wärmeabfuhr, des Innenkerns und Außenkerns verwendet werden.

Unter Temperieren versteht man eine Herabsetzung, Erhöhung oder ein Halten der Temperatur des Formkerns, des Formeinsatzes, des Formwerkzeuges oder eines Teiles davon. Insbesondere werden gasförmige oder flüssige Stoffe oder Gemische aus gasförmigen oder festen Stoffen als fluides Medium verwendet. Als fluides Medium können beispielsweise Wasser, Öl, Dampf, flüssiges oder gasförmiges Kohlenstoffdioxid oder andere Temperiermittel eingesetzt werden.

Die Temperierung des Formkerns ermöglicht eine Herstellung von Formteilen, insbesondere von länglichen, schmalen und dünnwandigen Formteilen wie Spritzenzylinder, Tablettenröhrchen, Schreibstifthülsen, Lippenstiftgehäusen oder Trinkbehältern, die verbesserte Verfahrensparameter in Bezug auf den Verzug, die Eigenspannung, die Oberflächenqualität sowie die Zykluszeit bereitstellen. Der erste Temperierkanal kann konturnah zu einem Formhohlraum ausgebildet werden, wodurch eine verbesserte Wärmeabfuhr und/oder Wärmezufuhr ermöglicht wird. Der Querschnitt der Formteile ist vorzugsweise rund, oval oder mehreckig.

Als Strömungselemente werden vorzugsweise Strömungsrippen oder Schotten eingesetzt, die Strömungsöffnungen umfassen. Der Fachmann erkennt, dass die Strömungselemente vorzugsweise an Außenflächen des Innenkerns anbringbar sind. Die Strömungselemente können auch an einer Innenfläche des Außenkerns angebracht werden. Weiterhin besteht die Möglichkeit, die Strömungselemente auf einer Trägerstruktur zu fixieren und diese zwischen der Außenfläche des Innenkerns und der Innenfläche des Außenkerns anzubringen. Der Außenkern wird auch als Hülse, Formkernhülse oder Formkernmantel bezeichnet.

Bei Verwendung mehrerer Werkstoffe für den Formkern und/oder den Formeinsatz zur Optimierung der Wärmeleit- und Festigkeitseigenschaften könnten wenigstens zwei unterschiedliche Werkstoffe mittels einer High-Tech-Fügetechnologie wie Laserstrahlschweißen oder Elektronenstrahlschweißen wasser- und gasdicht miteinander kraftschlüssig, formschlüssig und/oder stoffschlüssig verbunden werden. Kraftschlüssige Verbindungen beruhen darauf, dass Verbindungselemente Kräfte übertragen, indem sie ein Aufeinanderpressen der Fügeoberflächen bewirken. Zwischen den Flächen entsteht ein Reibungswiderstand, der größer ist als die von außen auf die Verbindung einwirkenden Kräfte. Formschlüssige Verbindungen werden dadurch bewirkt, dass die Form der zu verbindenden Werkstücke oder der Verbindungselemente die Kraftübertragung ermöglicht und damit den Zusammenhalt schafft. Bei einer stoffschlüssigen Verbindung werden die zu verbindenden Werkstücke mittels atomarer oder molekularer Kräfte zusammengehalten.

Der erfindungsgemäße Formkern kann beispielsweise in Spritzgussmaschinen eingesetzt werden, wobei die äußere Formfläche des Formkerns mit einer inneren Formfläche eines Formeinsatzes einen Formhohlraum ausbilden kann. Der Formhohlraum ist die negative Entsprechung des fertigen Spritzguss-Formteils. Durch die erfindungsgemäße Ausgestaltung kann vorteilhafter Weise die Schussfolge der Spritzgussmaschine verkürzt und die Produktivität gesteigert werden. Weiterhin ist von Vorteil, dass die prozessbedingte isotherme Oberflächenwandtemperatur eines Formhohlraumes über die gesamte Länge im Wesentlichen gleichmäßig verlaufen und im Wesentlichen über die gesamte Zeit des Spritzgussvorgangs konstant gehalten werden kann. Der erfndungsgemäße Formkern kann an unterschiedliche Anforderungen mittels des auswechselbaren und modularen Innenkerns angepasst werden. Vorteilhafterweise können durch diese Ausgestaltung Formteile realisiert werden, wobei das Verhältnis der Länge zum Durchmesser des Formkerns beispielsweise zwischen 1:1 und 50:1, vorzugsweise zwischen 2:1 und 30:1 liegt.

In einer bevorzugten Ausführungsform weist der Innenkern zumindest einen zweiten Temperierkanal zum Transport eines fluiden Mediums zur Wärmeabfuhr und/oder Wärmezufuhr auf, der mit zumindest einem zweiten Temperierkreis, der mittels der Strömungselemente des Innenkerns und der Innenfläche des Außenkerns gebildet ist, in Verbindung steht. Der zumindest zweite Temperierkreis grenzt an den ersten Temperierkreis an. Vorteilhafter Weise sind der erste Temperierkreis und der zumindest zweite Temperierkreis voneinander unabhängig temperierbar. Durch die Bereitstellung von zumindest zwei Temperierkreisen kann die durch einen Spritzgussvorgang anfallende Prozesswärme im Wesentlichen gleichmäßig und innerhalb kurzer Zeit abgeführt werden. Hierdurch kann insbesondere eine qualitativ hochwertige Oberflächenbeschaffenheit trotz der Herstellung von hohen Stückzahlen erzielt werden. Der Fachmann erkennt, dass insbesondere bei langen und schmalen Formteilen die Bereitstellung eines dritten, vierten oder weiteren Temperierkreises eine besonders vorteilhafte Ausgestaltung darstellt.

Die Strömungselemente können axial verschiebbar und/oder radial verstellbar ausgeführt sein. Die Strömungselemente werden insbesondere derart im Temperierkanal positioniert, dass das hindurchfließende fluide Medium eine turbulente Strömung erzeugt, wodurch eine verbesserte Wärmezufuhr und/oder Wärmeabfuhr ermöglicht wird. Durch die Verschiebbarkeit und/oder Verstellbarkeit können die Abstände und der Umlenkwinkel zwischen zwei benachbarten Strömungselementen entsprechend der Länge des Formkerns bzw. des Formteils bestimmt werden. Insbesondere bei länglichen und schmalen Formteilen wie Spritzenbehältern, Trinkgefäßen, Schreibstiftgehäusen oder dergleichen ist eine im Wesentlichen über die gesamte Länge des Formteils gleichmäßige Wärmeabfuhr und/oder Wärmezufuhr zur Reduzierung der Zykluszeit bei gleichzeitiger Optimierung der Spritzgussteilqualität wünschenswert, die durch die Strömungselemente ermöglicht werden. Durch die Möglichkeit der axial verschiebbaren und/oder radial verstellbaren Strömungselemente können Abmusterungswerkzeuge bereitgestellt werden, wodurch eine optimale Produktion und konstante Formteilequalität bei einem relativ großen Verarbeitungsfenster erzielt werden kann. Vorzugsweise wird durch die axial verschiebbaren und/oder radial verstellbaren Strömungselemente eine turbulente Strömung erzeugt.

Weiterhin können die Strömungselemente vorzugsweise zum Erzeugen einer turbulenten Strömung fest angeordnet sein. Vorteilhafter Weise sind die Strömungselemente derart im Temperierkanal angeordnet, dass eine mäanderförmige Ausgestaltung des Temperierkanals erzielt wird. Unter einer mäanderförmigen Ausgestaltung versteht man die dichte Aufeinanderfolge von Strömungselementen des Temperierkanals, wobei jeweils das fluide Medium umgelenkt wird. Beispielsweise sind die Strömungselemente derart im Temperierkanal ausgebildet, dass eine Umlenkung des fluiden Mediums um bis zu 180° erfolgt. Vorzugsweise werden die Strömungselemente mittels einer spanabhebenden Bearbeitung wie beispielsweise Fräsen gebildet, wobei Strömungsöffnungen vorteilhafter Weise schräg gegeneinander ausgeführt werden, so dass eine turbulente Strömung mit einer Reynold'schen Zahl größer 5.000, insbesondere größer als 10.000, vorzugsweise größer als 12.000 erzielt wird. Die Reynold'sche Zahl ist eine Kenngröße, welche die Flüssigkeitsströmung in Kanälen oder Rohren definiert.

Vorteilhafter Weise sind die Strömungselemente so angeordnet, dass eine im Wesentlichen von 90°- bis 180°-Umlenkung des fluiden Mediums ermöglicht wird. Hierdurch kann eine erhöhte Wirbelbildung erzielt werden. Die entstehende turbulente Strömung stellt unerwarteter Weise eine hohe Effizienz in Bezug auf den Wärmeaustausch bereit. Insbesondere können Reynold'sche Zahlen größer als 5.000, insbesondere größer als 10.000, vorzugsweise größer als 12.000 erreicht werden.

Bevorzugter Weise nehmen die Abstände von zwei benachbarten Strömungselementen vom ersten Temperierkreis in Richtung zum zweiten Temperierkreis zu.

In einer bevorzugten Ausführungsform ändert sich von einem ersten Temperiermittelzulauf zu einem ersten Temperiermittelablauf der Querschnitt des ersten Temperierkanals zum Erzeugen einer turbulenten Strömung und/oder ändert sich von zumindest einem zweiten Temperiermittelzulauf zu zumindest einem zweiten Temperiermittelablauf der Querschnitt des zumindest zweiten Temperierkanals zum Erzeugen einer turbulenten Strömung. Die Strömungsgeschwindigkeit des fluiden Mediums kann insbesondere durch Verengungen oder Erweiterungen des Temperierkanals erzielt werden.

In einer bevorzugten Ausführungsform umfasst der Innenkern eine Kupferlegierung und der Außenkern umfasst einen temperaturbeständigen Werkzeugstahl. Eine derartige Ausgestaltung ist insbesondere für Druckguss-Werkzeuge und Spritzguss-Werkzeuge im Bereich der Medizintechnik oder Kosmetikindustrie von Vorteil, da hier Werkstoffe, die beispielsweise Nickel oder Beryllium enthalten, nicht eingesetzt werden dürfen.

Der Formkern umfasst bevorzugter Weise entlang der Längsachse des Innenkerns und/oder des Außenkerns einen oder mehrere Funktionsbereiche. Ein Funktionsbereich weist vorzugsweise folgende Eigenschaften auf:
- eine definierte Festigkeit, die abhängig ist von den Werkstoffeigenschaften bzw. der Werkstoffauswahl und dem Werkstoffquerschnitt
- einen definierten Wärmeaustauschkoeffizienten, der umso größer ist, je mehr Wärmemenge pro Zeiteinheit von einer Flächeneinheit des Funktionsbereiches zu-/abgeführt werden kann. Der Wärmeaustauschkoeffizient ist abhängig von den Werkstoffeigenschaften, dem Werkstoffquerschnitt sowie dem Querschnitt und der Ausgestaltung der Temperierkanäle.

Dem Fachmann ist bekannt, dass Werkstoffe mit hohem Wärmeleitwert geringere Festigkeiten aufweisen.

Je mehr Funktionsbereiche, die vorzugsweise jeweils einem Temperierkreis zugeordnet sind, entlang der Längsachse des Formkerns angeordnet werden, desto mehr Temperierkanäle sind erforderlich und desto geringer ist der verbleibende Werkstoffquerschnitt, also die Festigkeit des Formkerns. Der Fachmann erkennt, dass einem Temperierkreis mehrere Funktionsbereiche zugeordnet werden können.

Es ist vorteilhaft, die Eigenschaften der ausgewählten Werkstoffe von der Anzahl der Temperierkanäle bzw. dem verbleibenden Werkstoffquerschnitt abhängig zu machen. Der Querschnitt der Temperierkanäle wird vorzugsweise einerseits gegenüber dem Querschnitt des Formkerns klein gewählt, um eine hohe Festigkeit bereitzustellen, andererseits so groß wie möglich, um einen hohen Durchsatz des fluiden Mediums zu ermöglichen und damit einen verbesserten Wärmeaustausch zu ermöglichen.

In einer weiteren bevorzugten Ausführungsform umfasst der Innenkern wenigstens zwei unterschiedliche Werkstoffe. Die unterschiedlichen Werkstoffe bilden einen ersten Funktionsbereich und zumindest einen zweiten Funktionsbereich aus. Der erste Funktionsbereich grenzt an den zumindest zweiten Funktionsbereich an. Weiterhin ist es bevorzugt, dass der Innenkern mehrere Funktionsbereiche, insbesondere drei Funktionsbereiche, vorzugsweise vier Funktionsbereiche umfasst.

Vorteilhafter Weise umfasst der erste Funktionsbereich des Innenkerns einen Werkstoff mit hoher Festigkeit, insbesondere einen Werkzeugstahl oder einen Hochleistungsstahl. Der verwendete Werkstoff soll sowohl mechanisch als auch dynamisch sehr hohen Belastungen Stand halten, eine hohe Härte und damit eine hohe Verschleißbeständigkeit aufweisen, um insbesondere eine möglichst lange, sichere und störungsfreie Produktionsstandzeit zu gewährleisten. Der Werkstoff ist vorteilhafter Weise korrosionsbeständig und weist eine niedrige Wärmeleitfähigkeit auf.

In einer bevorzugten Ausführungsform umfasst der zumindest zweite Funktionsbereich des Innenkerns einen Werkstoff mit hoher Warmfestigkeit. Ein Werkstoff mit hoher Warmfestigkeit weist auch bei erhöhten Temperaturen eine hohe Festigkeit auf.

In einer alternativen bevorzugten Ausführungsform umfasst der zumindest zweite Funktionsbereich des Innenkerns einen Werkstoff mit hoher Wärmeleitfähigkeit, vorzugsweise Kupfer oder eine Kupferlegierung. Werkstoffe mit einer hohen Wärmeleitfähigkeit können die auftretende Prozesswärme beim Spritzgießvorgang effektiv und gleichmäßig abführen. Ferner kann die prozessbedingte isotherme Oberflächenwandtemperatur eines Formhohlraumes über deren gesamte Geometrie im Wesentlichen gleichmäßig bereitgestellt und über die gesamte Zeit des Spritzgießvorgangs im Wesentlichen konstant gehalten werden.

Es ist vorteilhaft, dass der Innenkern einen dritten Werkstoff umfasst, der einen dritten Funktionsbereich ausbildet. Vorzugsweise wird ein Werkstoff mit hoher Wärmeleitfähigkeit, vorzugsweise Kupfer oder eine Kupferlegierung, verwendet. In einer alternativen Ausführungsform wird ein Werkstoff mit hoher Warmfestigkeit eingesetzt.

Bevorzugter Weise ist einem Temperierkreis zumindest ein Funktionsbereich zuordenbar. Es ist von Vorteil, dass dem zumindest zweiten Funktionsbereich des Innenkerns der erste Temperierkreis zugeordnet ist und dem dritten Funktionsbereich des Innenkerns der zumindest zweite Temperierkreis zugeordnet ist. Diese Ausgestaltung stellt einen effizienten Wärmeabtransport und/oder eine effiziente Wärmezuführung bereit.

Gemäß einer vorteilhaften Ausführungsform ist der erste Temperierkreis unabhängig vom zumindest zweiten Temperierkreis temperierbar. Durch zumindest zwei voneinander unabhängig steuerbare Temperierkreise, die vorzugsweise nahe an dem Formhohlraum angeordnet werden, kann eine verbesserte Zufuhr und/oder Abfuhr der Wärmemenge der eingespritzten oder eingepressten Formmasse bereitgestellt werden. Der erste Temperierkreis kann einen ersten Temperiermittelzulauf und einen ersten Temperiermittelablauf umfassen. Vorteilhafter Weise umfasst der zumindest zweite Temperierkreis zumindest einen zweiten Temperiermittelzulauf und zumindest einen zweiten Temperiermittelablauf. Die Temperierkreise sind strömungstechnisch steuerbar ausgestaltet.

In einer bevorzugten Ausführungsform umfasst der Außenkern wenigstens zwei unterschiedliche Werkstoffe. Die unterschiedlichen Werkstoffe bilden einen ersten Funktionsbereich und zumindest einen zweiten Funktionsbereich aus. Der erste Funktionsbereich grenzt an den zumindest zweiten Funktionsbereich an. Weiterhin kann der Außenkern weitere Funktionsbereiche, insbesondere einen dritten oder vierten Funktionsbereich, umfassen. Die unterschiedlichen Werkstoffe werden vorzugsweise mittels einer High-Tech-Fügetechnologie wie Laserstrahlschweißen oder Elektronenstrahlschweißen wasser- und gasdicht miteinander kraftschlüssig, formschlüssig und/oder stoffschlüssig verbunden.

Bevorzugter Weise umfasst der erste Funktionsbereich des Außenkerns einen Werkstoff mit hoher Festigkeit und der zumindest zweite Funktionsbereich des Außenkerns einen Werkstoff mit hoher Warmfestigkeit. Beispielsweise wird Werkzeugstahl oder Hochleistungsstahl als Werkstoff mit einer hohen Festigkeit verwendet. Der verwendete Werkstoff hält sowohl mechanisch als auch dynamisch sehr hohen Belastungen Stand und weist eine hohe Härte und damit eine hohe Verschleißbeständigkeit auf, um insbesondere eine möglichst lange, sichere und störungsfreie Produktionszeit zu gewährleisten. Der Werkstoff ist vorteilhafter Weise korrosionsbeständig und hat eine niedrige Wärmeleitfähigkeit.

Es ist weiterhin bevorzugt, dass der zumindest zweite Funktionsbereich des Außenkerns einen Werkstoff mit hoher Warmfestigkeit und der dritte Funktionsbereich des Außenkerns einen Werkstoff mit hoher Wärmeleitfähigkeit umfasst. Vorzugsweise wird als Werkstoff Kupfer oder eine Kupferlegierung verwendet. Werkstoffe mit einer hohen Wärmeleitfähigkeit können die auftretende Prozesswärme beim Spritzgießvorgang effektiv, rasch und gleichmäßig abführen.

Es ist von Vorteil, dass zwei unterschiedliche Werkstoffe mittels einer High-Tech-Fügetechnologie wie Laserstrahlschweißen oder Elektronenstrahlschweißen wasser- und gasdicht miteinander kraftschlüssig, formschlüssig und/oder stoffschlüssig verbunden werden können.

Vorteilhafter Weise sind zwischen zwei angrenzenden Temperierkreisen Dichtungselemente ausgebildet. Die Dichtungselemente ermöglichen eine Abschottung des ersten Temperierkreises vom zumindest zweiten Temperierkreis, wodurch beispielsweise eine Kühlung des ersten Temperierkreises und eine Erwärmung des zumindest zweiten Temperierkreises effizient bereitgestellt werden kann. Die vorzugsweise voneinander unabhängig betriebenen Temperierkreise ermöglichen eine effiziente Wärmeabfuhr und/oder Wärmezufuhr der Formmasse im Formhohlraum.

Bevorzugter Weise weist der Innenkern eine im Wesentlichen zentrale Bohrung auf, die zur Entlüftung und/oder zur Aufnahme eines zentralen Auswerfers dient, wodurch ein schnelles Lösen des Formteiles von dem Formkern und eines Formeinsatzes ermöglicht wird.

Der erfindungsgemäße Formeinsatz zum Formen von äußeren Konturen von Formteilen, geeignet für ein Formwerkzeug, umfasst eine Außenfläche, eine Innenfläche mit einem Hohlraum, der einen Boden, eine Seitenfläche und eine Öffnung, die gegenüber dem Boden vorgesehen ist, aufweist. Zwischen der Außenfläche und der Innenfläche ist in Längsrichtung ein erster Temperierkreis ausgebildet, der einen ersten Temperiermittelzulauf, einen ersten Temperierkanal zum Transport eines fluiden Mediums zur Wärmeabfuhr und/oder Wärmezufuhr, Strömungselemente und einen ersten Temperiermittelablauf umfasst.

Vorteilhafter Weise kann durch diese Ausgestaltung die Zykluszeit erheblich reduziert werden, wobei die Spritzteilqualität gleichzeitig optimiert wird. Die Temperierung des Formeinsatzes ermöglicht eine Herstellung von Formteilen, insbesondere von länglichen und schmalen Formteilen wie Spritzenzylinder, Tablettenröhrchen, Schreibstifthülsen, Lippenstiftgehäusen oder Trinkbehältern, die verbesserte Verfahrensparameter in Bezug auf den Verzug, die Eigenspannung, die Oberflächenqualität sowie die Zykluszeit bereitstellen. Der erste Temperierkreis kann konturnah zu einem Formhohlraum ausgebildet werden, wodurch eine verbesserte Wärmeabfuhr und/oder Wärmezufuhr ermöglicht wird. Der Querschnitt der Formteile ist vorzugsweise rund, oval oder mehreckig.

Um dies zu erreichen, weist der Werkstoff, der den Formhohlraum bildet, vorzugsweise eine hohe bis sehr hohe Wärmeleitfähigkeit auf, um die entstehende Prozesswärme schnell und möglichst gleichmäßig abzuführen. Das fluide Medium kann zum Erwärmen, d.h. zur Wärmezufuhr, oder zum Abkühlen, d.h. zur Wärmeabfuhr, verwendet werden.

Vorteilhafter Weise umfasst der Formeinsatz wenigstens zwei unterschiedliche Werkstoffe, die mittels einer High-Tech-Fügetechnologie wie Laserstrahlschweißen oder Elektronenstrahlschweißen verbunden werden können.

Gemäß einer bevorzugten Ausführungsform ist zwischen der Außenfläche und der Innenfläche zumindest ein zweiter Temperierkreis, der an den ersten Temperierkreis angrenzt, ausgebildet. Der zumindest zweite Temperierkreis umfasst zumindest einen zweiten Temperiermittelzulauf, zumindest einen zweiten Temperierkanal zum Transport eines fluiden Mediums zur Wärmeabfuhr und/oder Wärmezufuhr, Strömungselemente und zumindest einen zweiten Temperiermittelablauf. Der zumindest zweite Temperierkreis grenzt an den ersten Temperierkreis an. Vorteilhafter Weise ist beim Formeinsatz der erste Temperierkreis unabhängig vom zumindest zweiten Temperierkreis temperierbar. Durch die Bereitstellung von zumindest zwei Temperierkreisen kann die durch einen Spritzgussvorgang anfallende Prozesswärme im Wesentlichen gleichmäßig und innerhalb kurzer Zeit abgeführt werden. Hierdurch kann insbesondere durch Beheizung eine qualitativ hochwertige Oberflächenbeschaffenheit der Formteile erzielt werden, trotz der Herstellung von hohen Stückzahlen innerhalb kürzester Zeit. Der Fachmann erkennt, dass insbesondere bei langen und schmalen Formteilen die Bereitstellung eines dritten, vierten oder weiteren Temperierkreises eine besonders vorteilhafte Ausgestaltung darstellt.

Gemäß einer vorteilhaften Ausführungsform ändert sich vom ersten Temperiermittelzulauf zum ersten Temperiermittelablauf der Querschnitt des ersten Temperierkanals zum Erzeugen einer turbulenten Strömung und/oder ändert sich vom zumindest zweiten Temperiermittelzulauf zum zumindest zweiten Temperiermittelablauf der Querschnitt des zweiten Temperierkanals zum Erzeugen einer turbulenten Strömung. Durch Verengungen oder Erweiterungen des Temperierkanals kann eine turbulente Strömung des fluiden Mediums erzielt werden.

In einer bevorzugten Ausführungsform sind die Strömungselemente axial verschiebbar und/oder radial verstellbar. Vorzugsweise sind die Strömungselemente derart ausgerichtet, dass eine turbulente Strömung des fluiden Mediums erreicht wird. Hierdurch wird eine verbesserte Wärmezufuhr und/oder Wärmeabfuhr ermöglicht. Durch die Verschiebbarkeit und/oder Verstellbarkeit der Strömungselemente können die Abstände und der Umlenkwinkel zwischen zwei benachbarten Strömungselementen entsprechend der Länge des Formteils bestimmt werden. Insbesondere bei länglichen und schmalen Formteilen wie Spritzenbehältern, Trinkgefäßen, Schreibstiftgehäusen oder dergleichen ist eine im Wesentlichen über die gesamte Länge des Formteils gleichmäßige Wärmeabfuhr und/oder eine steuerbare Temperierung für die Optimierung der Formmasse zur Reduzierung der Zykluszeit bei gleichzeitiger Optimierung der Formteilqualität wünschenswert, die durch die Strömungselemente ermöglicht werden.

In einer weiteren bevorzugten Ausführungsform sind die Strömungselemente zum Erzeugen einer turbulenten Strömung fest angeordnet. Vorteilhafter Weise sind die Strömungselemente derart angeordnet, dass eine mäanderförmige Ausgestaltung des Temperierkanals erzielt wird. Unter einer mäanderförmigen Ausgestaltung versteht man die dichte Aufeinanderfolge der Strömungselemente des Temperierkanals, wobei das fluide Medium jeweils an den Strömungselementen umgelenkt wird.

Es ist von Vorteil, dass die Strömungselemente derart angeordnet sind, dass eine im Wesentlichen 90°- bis 180°-Umlenkung des fluiden Mediums ermöglicht wird. Die Umlenkung des fluiden Mediums bewirkt eine turbulente Strömung, die unerwarteter Weise eine erhöhte Effizienz hinsichtlich des Wärmeaustausches bereitstellt. Vorzugsweise werden Reynold'sche Zahlen größer 5.000, insbesondere größer 10.000, vorzugsweise größer als 12.000 erreicht.

Bevorzugter Weise umfasst die Seitenfläche einen Werkstoff mit hoher Wärmeleitfähigkeit, insbesondere Kupfer oder eine Kupferlegierung.

Es ist weiterhin bevorzugt, dass der Boden, der einen Angussbereich aufweist, einen Werkstoff mit hoher Festigkeit, insbesondere Werkzeugstahl, umfasst.

In einer vorteilhaften Ausführungsform ist angrenzend an den Boden eine Vorkammerbuchse ausgebildet, wobei eine Heißkanaldüse mit dem Angussbereich in Eingriff steht und im Angussbereich eine Kühlmitteleinrichtung vorgesehen ist.

Das erfindungsgemäße Formwerkzeug zur Fertigung von Formteilen umfasst einen erfindungsgemäßen Formkern, einen erfindungsgemäßen Formeinsatz, wobei der erfindungsgemäße Formkern und der erfindungsgemäße Formeinsatz relativ zueinander beweglich sind und im geschlossenen Zustand einen Formhohlraum für ein Formteil ausbilden. Die äußere Formfläche des erfndungsgemäßen Formkerns bildet mit einer inneren Formfläche eines erfindungsgemäßen Formeinsatzes einen Formhohlraum. Der Formhohlraum ist die negative Entsprechung des fertigen Spritzguss-Formteils. Beispielsweise spritzt eine Spritzgussmaschine eine aufbereitete Formmasse unter hohem Druck und hoher Temperatur in einer vorher festgelegten Zeit in den Formhohlraum. Mittels der erfindungsgemäßen Ausgestaltung des Formwerkzeuges wird eine optimierte Abkühlung der geformten Formmasse bereitgestellt. Die Zykluszeit kann erheblich reduziert werden bei gleichzeitiger Optimierung der Spritzguss-Formteilequalität. Nach Erstarren der Formmasse kann das fertige Spritzguss-Formteil beispielsweise mittels eines Auswerfers oder Entlüfters ausgestoßen werden. Das Formwerkzeug kann für ein temperierbares Kunststoffspritzgießwerkzeug für Spritzgießteile aus Thermoplasten und/oder Duroplasten und/oder für ein temperierbares Druckgusswerkzeug verwendet werden. Bei Druckgusswerkzeugen werden vorzugsweise als Werkstoffe temperaturbeständige Werkzeugstähle eingesetzt.

Vorteilhafter Weise umfasst der Formhohlraum zur Temperierung eines Formteils einen ersten Temperierkreis und zumindest einen zweiten Temperierkreis, die konturnah zum Formhohlraum ausgebildet sind, wobei der erste Temperierkreis unabhängig vom zweiten Temperierkreis temperierbar ist.

Vorteilhafter Weise ist eine Formtrennfläche vorgesehen, die eine passgenaue Positionierung des Formkerns und des Außenkerns ermöglicht. Formtrennflächen haben einerseits die passgenaue Positionierung des Formkerns und des Außenkerns sicherzustellen, müssen das dichte Verschließen ermöglichen und haben hinsichtlich der Festigkeit und Dichtigkeit den Anforderungen an hohe Temperaturwechselbeanspruchung standzuhalten.

### 4. Kurze Beschreibung der begleitenden Figuren

Im Folgenden werden Aspekte der vorliegenden Erfindung unter Bezugnahme auf die begleitenden Figuren genauer erläutert. Diese Figuren zeigen:
- Fig.1a bis 1d:: verschiedene Ansichten eines bevorzugten Ausführungsbeispiels eines Innenkerns der vorliegenden Erfindung;
- Fig. 2a bis 2d:: verschiedene Ansichten eines weiteren bevorzugten Ausführungsbeispiels eines Innenkerns der vorliegenden Erfindung;
- Fig. 3a bis 3d:: verschiedene Ansichten eines weiteren bevorzugten Ausführungsbeispiels eines Innenkerns der vorliegenden Erfindung;
- Fig. 4:: eine Schnittansicht eines bevorzugten Ausführungsbeispiels eines Außenkerns der vorliegenden Erfindung;
- Fig. 5a:: eine Schnittansicht eines bevorzugten Ausführungsbeispiels eines Formkerns der vorliegenden Erfindung;
- Fig. 5b:: eine Schnittansicht des in Fig. 4a dargestellten bevorzugten Ausführungsbeispiels;
- Fig. 6a bis 6d:: verschiedene Ansichten eines weiteren bevorzugten Ausführungsbeispiels eines Formkerns der vorliegenden Erfindung;
- Fig. 7:: eine Schnittansicht eines weiteren bevorzugten Ausführungsbeispiels eines Formkerns der vorliegenden Erfindung;
- Fig. 8:: eine Schnittansicht eines weiteren bevorzugten Ausführungsbeispiels eines Formkerns der vorliegenden Erfindung;
- Fig. 9a:: eine teilweise Schnittansicht eines weiteren bevorzugten Ausführungsbeispiels eines Formkerns der vorliegenden Erfindung mit einem zentralen Auswerfer und zwei Funktionsbereichen;
- Fig. 9b:: eine teilweise Schnittansicht eines weiteren bevorzugten Ausführungsbeispiels eines Formkerns der vorliegenden Erfindung ohne zentralen Auswerfer mit drei Funktionsbereichen;
- Fig. 10:: eine Schnittansicht eines bevorzugten Ausführungsbeispiels eines Formeinsatzes der vorliegenden Erfindung;
- Fig. 11a:: eine Schnittansicht eines bevorzugten Ausführungsbeispiels eines Formwerkzeuges der vorliegenden Erfindung;
- Fig. 11b:: einen Querschnitt des bevorzugten Ausführungsbeispiels nach Fig.11a entlang der Linie B-B;

### 5. Detaillierte Beschreibung bevorzugter Ausführungsbeispiele

Im Folgenden werden gegenwärtig bevorzugte Ausführungsbeispiele der vorliegenden Erfindung anhand der begleitenden Figuren näher erläutert.

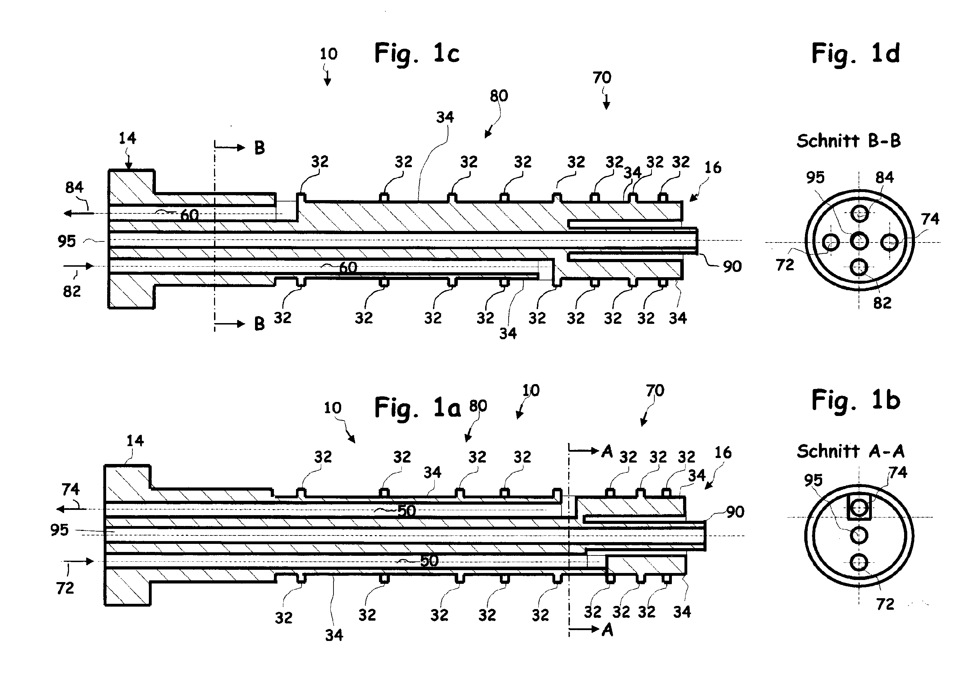

Figur la zeigt eine Schnittansicht eines bevorzugten Ausführungsbeispiels eines Innenkerns 10 der vorliegenden Erfindung und Figur 1b zeigt einen Querschnitt des bevorzugten Ausführungsbeispiels nach Figur la entlang der Linie A-A. Gleiche Bauteile weisen gleiche Bezugszeichen auf.

Der Innenkern 10 ist ein länglicher Kernstift, der an einem Ende einen Flansch 14 und am anderen Ende eine Kernspitze 16 aufweist. Der Innenkern 10 hat einen ersten Temperierkreis 70 und einen zweiten Temperierkreis 80. Der erste Temperierkreis 70 weist einen ersten Temperiermittelzulauf 72, einen ersten Temperierkanal 50 und einen ersten Temperiermittelablauf 74 auf. Der erste Temperierkanal 50 erstreckt sich konturnah an einer Außenfläche 34 des Innenkerns 10 in Richtung der Kernspitze 16 zum ersten Temperierkreis 70. Im Wesentlichen im Zentrum des Kernstifts ist eine zentrale Bohrung 95 ausgebildet. An der Außenfläche 34 des Innenkerns 10 sind Strömungselemente 32 fest angeordnet. Der Fachmann erkennt, dass die Strömungselemente 32 auch axial verschiebbar und/oder radial verstellbar ausgeführt werden können. Weiterhin besteht die Möglichkeit, die Strömungselemente 32 auf einer Trägerstruktur zu fixieren und diese zwischen der Außenfläche 34 des Innenkerns 10 und einer Innenfläche eines Außenkerns (nicht dargestellt) anzubringen.

Ein fluides Medium bzw. ein Temperiermittel, welches zum Temperieren des Innenkerns 10 verwendet werden kann, fließt vom ersten Temperiermittelzulauf 72 durch den ersten Temperierkanal 50 zum ersten Temperierkreis 70, wird an jedem Strömungselement 32 umgelenkt, wodurch eine turbulente Strömung erzeugt wird, und fließt konturnah im ersten Temperierkanal 50 zum ersten Temperiermittelablauf 74. Die Strömungselemente 32 sind vorzugsweise mäanderförmig ausgestaltet. An der Kernspitze 16 des Innenkerns 10 sind Dichtungselemente 90, insbesondere O-Ringdichtungen, angeordnet. Die Kernspitze 16 des Innenkerns 10 kann plan, zentrisch oder exzentrisch, mit oder ohne Bohrung in der Spitze ausgeführt sein.

Figur 1c zeigt eine um 90° gedrehte Schnittansicht des bevorzugten Ausführungsbeispiels des Innenkerns 10 der vorliegenden Erfindung und Figur 1d zeigt einen Querschnitt des Innenkerns 10 nach Figur 1c entlang der Linie B-B. In Figur 1c ist der zweite Temperierkreis 80 zu erkennen. Der zweite Temperierkreis 80 weist einen zweiten Temperiermittelzulauf 82, einen zweiten Temperierkanal 60 und einen zweiten Temperiermittelablauf 84 auf. Der zweite Temperierkanal 60 erstreckt sich konturnah an der Außenfläche 34 des Innenkerns 10 zum zweiten Temperierkreis 80. Das fluide Medium bzw. das Temperiermittel fließt vom zweiten Temperiermittelzulauf 82 durch den zweiten Temperierkanal 60 zum zweiten Temperierkreis 80, wird an jedem Strömungselement 32 umgelenkt, wodurch eine turbulente Strömung erzeugt wird, und fließt konturnah im zweiten Temperierkanal 60 zum zweiten Temperiermittelablauf 84. Die Strömungselemente 32 sind vorzugsweise mäanderförmig ausgestaltet.

Der erste Temperierkreis 70 ist unabhängig vom zumindest zweiten Temperierkreis 80 temperierbar. Sowohl im ersten Temperkreis 70 als auch im zweiten Temperierkreis 80 wird eine turbulente Strömung erzeugt, wodurch eine verbesserte Wärmeabfuhr und/oder Wärmezufuhr bereitgestellt wird.

Der Innenkern 10 umfasst eine im Wesentlichen zentrale Bohrung 95, die zur Belüftung und/oder zur Aufnahme eines zentralen Auswerfers dient, wodurch nach dem Abkühlen ein schnelles Lösen des Formteiles von dem Formkern und eines Formeinsatzes ermöglicht wird.

Der Innenkern 10 umfasst als Werkstoff beispielsweise eine hochwertige Kupferlegierung mit hoher Festigkeit. Vorzugsweise weist die Kernspitze 16 des Innenkerns 10 einen Werkstoff mit hoher Festigkeit und hoher Verschleißbeständigkeit, insbesondere einen hochwertigen Werkzeugstahl auf.

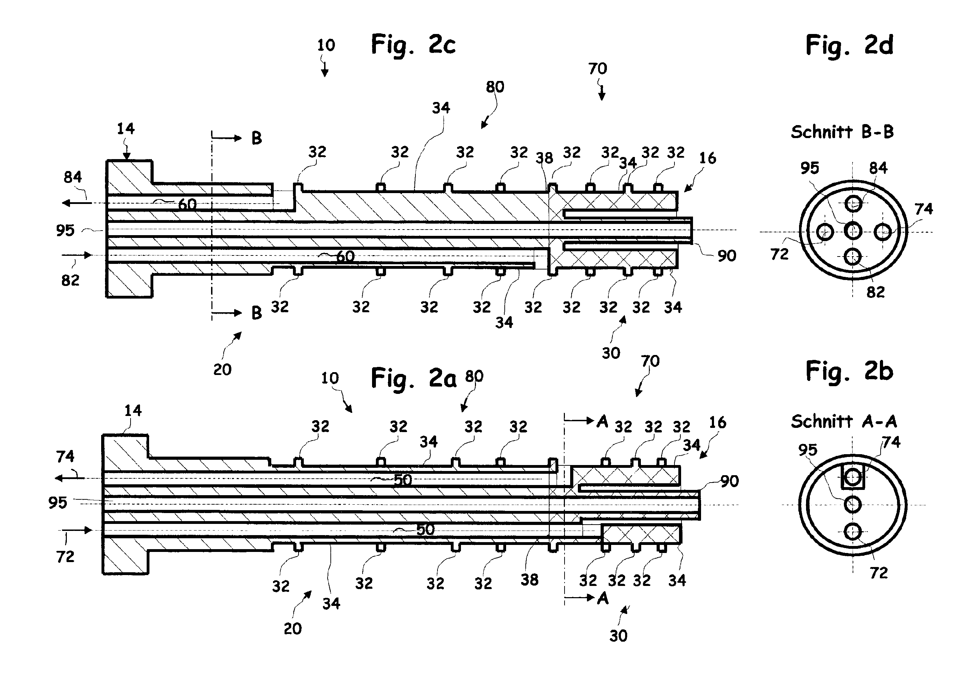

Figuren 2a bis 2d zeigen verschiedene Ansichten eines weiteren bevorzugten Ausführungsbeispiels eines Innenkerns der vorliegenden Erfindung. Gleiche Bauteile wurden mit gleichen Bezugszeichen versehen.

Der Innenkern 10 umfasst wenigstens zwei unterschiedliche Werkstoffe. Die wenigstens zwei unterschiedlichen Werkstoffe sind mittels einer High-Tech-Fügetechnologie, insbesondere Laserstrahlschweißen oder Elektronenstrahlschweißen, verbunden. Der Innenkern 10 hat einen ersten Funktionsbereich 20, einen zweiten Funktionsbereich 30, der an den ersten Funktionsbereich 20 angrenzt. Der erste Funktionsbereich 20 des Innenkerns 10 umfasst einen Werkstoff mit hoher Festigkeit, insbesondere Werkzeugstahl. Der zweite Funktionsbereich 30 des Innenkerns 10 umfasst einen Werkstoff mit hoher Warmfestigkeit. Alternativ kann der zweite Funktionsbereich 30 einen Werkstoff mit hoher Wärmeleitfähigkeit, insbesondere Kupfer oder eine Kupferlegierung, umfassen. Dem ersten Temperierkreis 70 ist vorzugsweise im Wesentlichen der zweite Funktionsbereich 30 und dem zweiten Temperierkreis 80 ist vorzugweise im Wesentlichen der erste Funktionsbereich 20 zugeordnet. In Figur 2c ist beispielhaft eine Fügelinie der unterschiedlichen Werkstoffe mit dem Bezugszeichen 38 dargestellt.

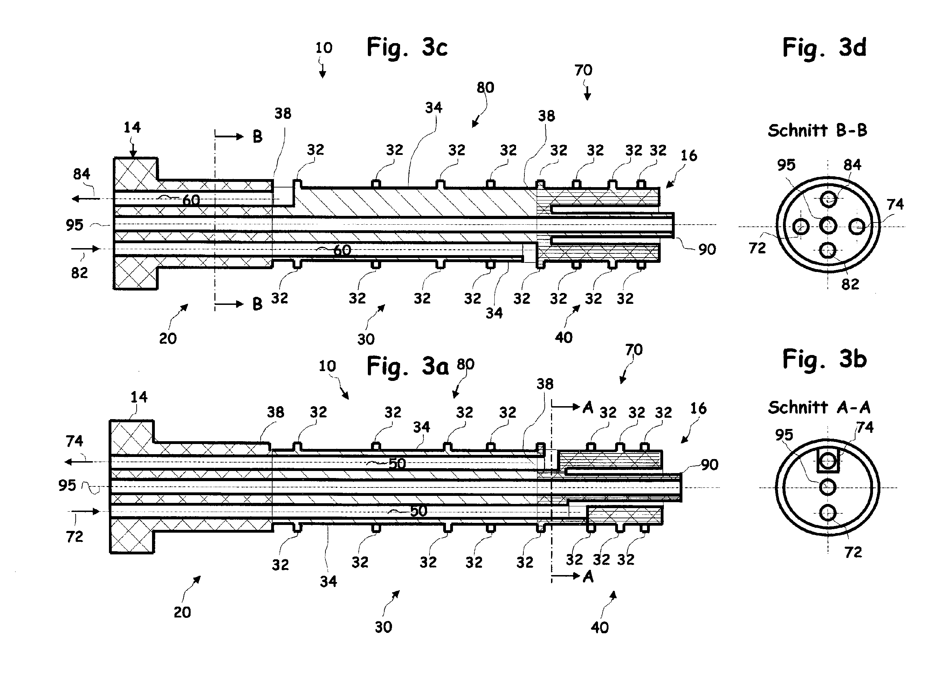

Figuren 3a bis 3d zeigen verschiedene Ansichten eines weiteren bevorzugten Ausführungsbeispiels eines Innenkerns der vorliegenden Erfindung. Gleiche Bauteile weisen gleiche Bezugszeichen auf.

Der Innenkern 10 umfasst drei unterschiedliche Werkstoffe. Die drei unterschiedlichen Werkstoffe sind mittels einer High-Tech-Fügetechnologie, insbesondere Laserstrahlschweißen oder Elektronenstrahlschweißen, verbunden. Der Innenkern 10 hat einen ersten Funktionsbereich 20, einen zweiten Funktionsbereich 30, der an den ersten Funktionsbereich 20 angrenzt, und einen dritten Funktionsbereich 40, der an den zweiten Funktionsbereich 30 angrenzt. Der erste Funktionsbereich 20 des Innenkerns 10 umfasst einen Werkstoff mit hoher Festigkeit, insbesondere Werkzeugstahl. Der zweite Funktionsbereich 30 des Innenkerns 10 umfasst einen Werkstoff mit hoher Warmfestigkeit. Der dritte Funktionsbereich 40 umfasst einen Werkstoff mit hoher Wärmeleitfähigkeit, insbesondere Kupfer oder eine Kupferlegierung. Dem ersten Temperierkreis 70 ist vorzugsweise im Wesentlichen der dritte Funktionsbereich 40 und dem zweiten Temperierkreis 80 ist vorzugweise im Wesentlichen der zweite Funktionsbereich 30 zugeordnet. In Figur 3c sind beispielhaft Fügelinien der unterschiedlichen Werkstoffe mit dem Bezugszeichen 38 dargestellt. Der Fachmann erkennt, dass eine andere Kombination der Werkstoffe und Zuordnung der Temperierkreise zweckmäßig sein kann.

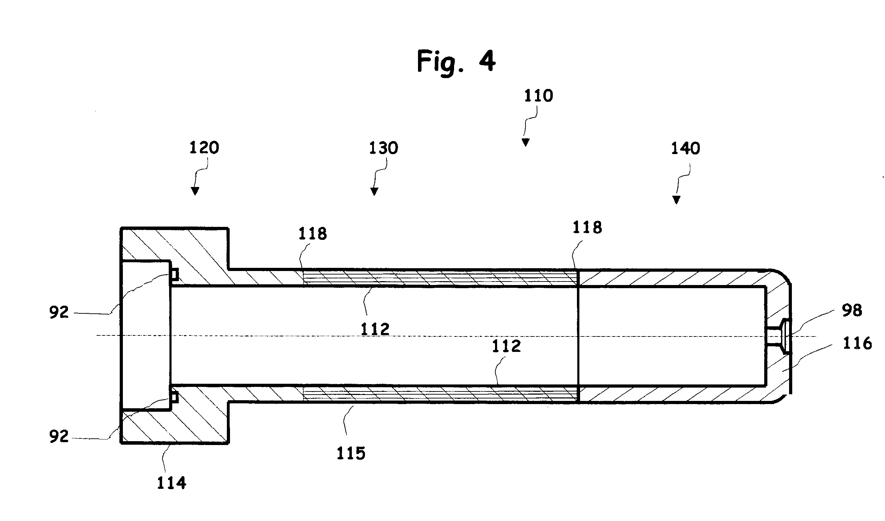

Figur 4 zeigt eine Schnittansicht eines bevorzugten Ausführungsbeispiels eines Außenkerns 110 der vorliegenden Erfindung.

Der Außenkern 110 weist eine Hülse 115 auf, an dessen einen Ende ein Flansch 114 und am anderen Ende ein Boden 116 mit einem zentralen Auswerfer 98 ausgebildet ist. Der zentrale Auswerfer 98 ist beispielsweise mittels Pressluft betätigbar. Der Außenkern 110 umfasst wenigstens zwei unterschiedliche Werkstoffe. Die wenigstens zwei unterschiedlichen Werkstoffe sind mittels einer High-Tech-Fügetechnologie, insbesondere Laserstrahlschweißen oder Elektronenstrahlschweißen, verbunden. Der Außenkern 110 weist einen ersten Funktionsbereich 120, einen zweiten Funktionsbereich 130, der an den ersten Funktionsbereich 120 angrenzt, und einen dritten Funktionsbereich 140 auf, der an den zweiten Funktionsbereich 130 angrenzt. Der erste Funktionsbereich 120 des Außenkerns 110 umfasst einen Werkstoff mit hoher Festigkeit, der zweite Funktionsbereich 130 des Außenkerns 110 umfasst einen Werkstoff mit hoher Warmfestigkeit und der dritte Funktionsbereich 140 des Außenkerns 110 umfasst einen Werkstoff mit hoher Wärmeleitfähigkeit.

Der Fachmann erkennt, dass beispielsweise der erste Funktionsbereich 120 und der zweite Funktionsbereich 130 aus einem Werkstoff ausgebildet, jedoch die jeweiligen Querschnitte unterschiedlich sein können, wodurch sich unterschiedliche Wärmeaustauschkoeffizienten und/oder Festigkeiten ergeben.

Beim Kunststoff-Spritzguss werden bevorzugter Weise Werkstoffe mit einer hohen Wärmeleitfähigkeit, insbesondere von 120 bis 400 W/(m*K), vorzugsweise von 140 bis 260 W/(m*K), verwendet. Beispielsweise weist eine hochwertige Kupferlegierung mit hoher Festigkeit eine hohe Wärmeleitfähigkeit auf. Beim Druckguss werden bevorzugter Weise Werkstoffe mit einer hohen Temperaturwechselfestigkeit, vorzugsweise ein hochwertiger Werkzeugstahl, eingesetzt.

Der Flansch 114 umfasst Dichtungselemente 92, insbesondere eine O-Ring-Dichtung. Der Außenkern 110 hat eine Innenfläche 112. Beim Einfügen des Innenkerns 10 in den Außenkern 110 steht die Innenfläche 112 des Außenkerns 110 mit der Außenfläche 34 des Innenkerns 10 in Kontakt. In Figur 4 ist beispielhaft eine Fügelinie der unterschiedlichen Werkstoffe mit dem Bezugszeichen 118 dargestellt.

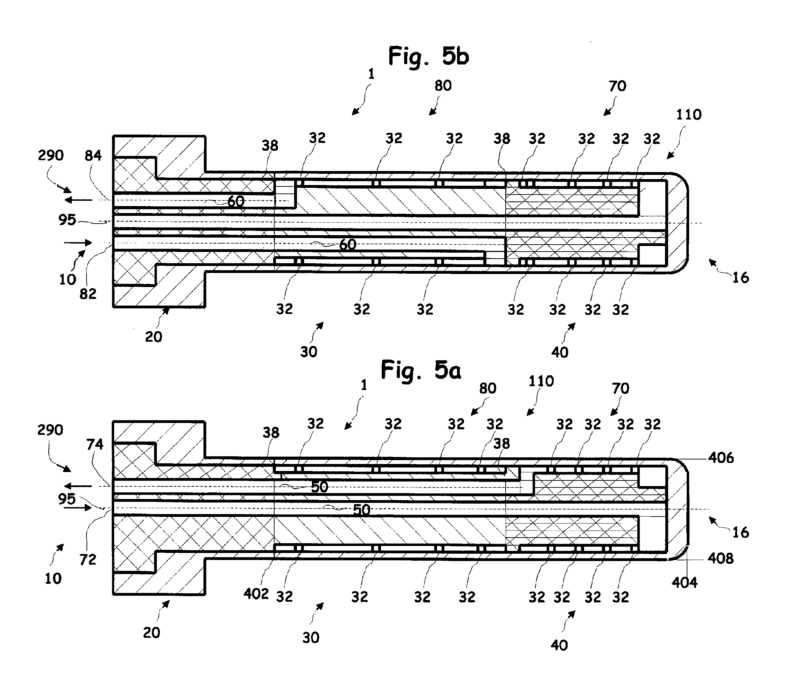

Figur 5a zeigt eine Schnittansicht eines bevorzugten Ausführungsbeispiels eines Formkerns der vorliegenden Erfindung und Figur 5b zeigt eine Schnittansicht des in Figur 5a dargestellten bevorzugten Ausführungsbeispiels. Gleiche Bauteile weisen gleiche Bezugszeichen auf.

In den Figuren 5a und 5b ist ein Formkern 1 abgebildet. Der Formkern 1 hat einen Außenkern 110, in den ein Innenkern 10 eingefügt ist. Der Innenkern 10 hat eine im Wesentlichen zentrale Bohrung 95. Der Formkern 1 besitzt keinen zentralen Auswerfer. Der Formkern umfasst einen ersten Temperierkreis 70 und einen zweiten Temperierkreis 80. Der erste Temperierkreis 70 weist einen ersten Temperiermittelzulauf 72, der in der zentralen Bohrung 95 ausgebildet ist, einen ersten Temperierkanal 50 und einen ersten Temperiermittelablauf 74 auf. Der erste Temperierkanal 50 erstreckt sich in der zentralen Bohrung 95 des Innenkerns 10 in Richtung der Kernspitze 16 zum ersten Temperierkreis 70.

Ein fluides Medium bzw. ein Temperiermittel fließt vom ersten Temperiermittelzulauf 72 durch den ersten Temperierkanal 50 zum ersten Temperierkreis 70, wird an jedem Strömungselement 32 umgelenkt, wodurch eine turbulente Strömung erzeugt wird, und fließt konturnah im ersten Temperierkanal 50 zum ersten Temperiermittelablauf 74. Die Strömungselemente sind im ersten Temperierkreis 70 vorzugsweise mäanderförmig ausgestaltet. Die Kernspitze 16 des Innenkerns 10 kann plan, zentrisch oder exzentrisch, mit oder ohne Bohrung in der Spitze ausgeführt sein. Vorzugsweise weist die Kernspitze 16 des Innenkerns 10 einen Werkstoff mit hoher Festigkeit und hoher Verschleißbeständigkeit, insbesondere einen hochwertigen Werkzeugstahl auf. Diese Ausgestaltung ist für Spritzguss-Werkzeuge und/oder Druckguss-Werkzeuge insbesondere im Bereich der Medizintechnik oder Pharmaindustrie besonders vorteilhaft.

Beim zweiten Temperierkreis 80 fließt das fluide Medium bzw. das Temperiermittel vom zweiten Tempermittelzulauf 82 durch den zweiten Temperierkanal 60, wird an jedem Strömungselement 32 umgelenkt, wodurch eine turbulente Strömung erzeugt wird, und fließt anschließend im zweiten Temperierkanal 60 zum zweiten Temperiermittelablauf 84. Zwischen den beiden Temperierkreisen 70 und 80 sind Dichtungselemente ausgebildet. Der erste Temperierkreis 70 ist unabhängig vom zumindest zweiten Temperierkreis 80 temperierbar. Sowohl im ersten Temperkreis 70 als auch im zweiten Temperierkreis 80 wird eine turbulente Strömung erzeugt, wodurch eine verbesserte Wärmeabfuhr und/oder Wärmezufuhr bereitgestellt wird.

In Figur 5a ist beispielhaft die Länge L eines Formhohlraumes mit den Bezugszeichen 402 und 404 dargestellt. Der Durchmesser D eines Formhohlraumes ist mittels der Bezugszeichen 406 und 408 illustriert. In Figur 5b ist beispielhaft eine Fügelinie der unterschiedlichen Werkstoffe mit dem Bezugszeichen 38 dargestellt. Sowohl der Innenkern 10 als auch der Außenkern 110 umfassen wenigstens zwei unterschiedliche Werkstoffe.

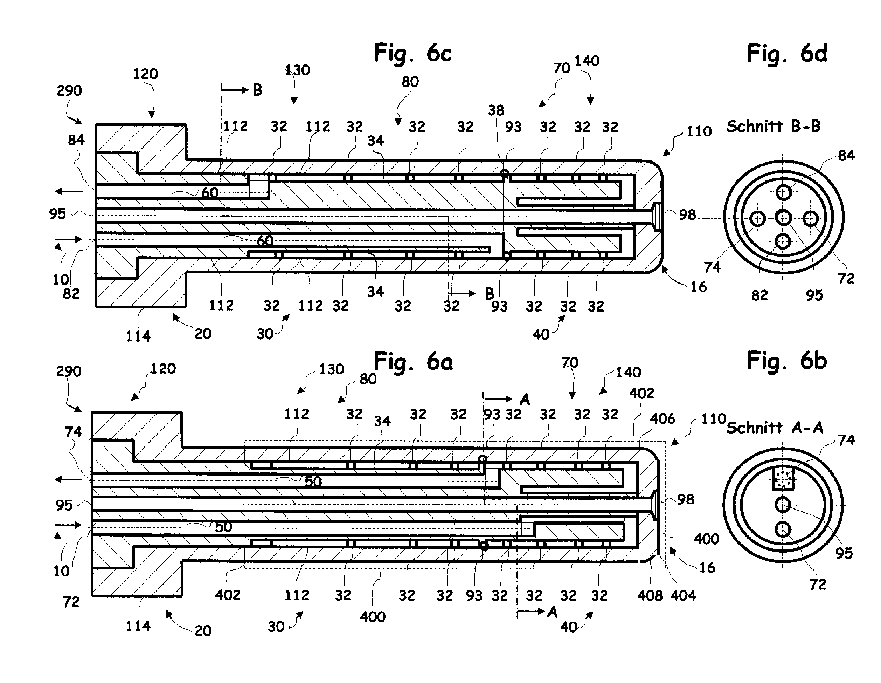

Figuren 6a bis 6d zeigen verschiedene Ansichten eines weiteren bevorzugten Ausführungsbeispiels eines Formkerns der vorliegenden Erfindung. Gleiche Bauteile weisen gleiche Bezugszeichen auf.

In den Figuren 6a und 6b ist ein Formkern 1, der einen Innenkern 10 und einen Außenkern 110 umfasst, dargestellt. Der Innenkern 10 hat eine im Wesentlichen zentrale Bohrung 95. Am Ende der zentralen Bohrung 95 ist ein zentraler Auswerfer bzw. Entlüfter 98 ausgebildet. Der Formkern umfasst einen ersten Temperierkreis 70 und einen zweiten Temperierkreis 80. Der erste Temperierkreis 70 weist einen ersten Temperiermittelzulauf 72, einen ersten Temperierkanal 50, der konturnah an der Außenfläche 34 des Innenkerns 10 verläuft, und einen ersten Temperiermittelablauf 74 auf. Der erste Temperierkanal 50 erstreckt sich in Richtung der Kernspitze 16 zum ersten Temperierkreis 70.

Ein fluides Medium bzw. ein Temperiermittel fließt vom ersten Temperiermittelzulauf 72 durch den ersten Temperierkanal 50 zum ersten Temperierkreis 70. Die Strömungselemente 32 lenken das fluide Medium derart um, dass eine turbulente Strömung erzeugt wird. Anschließend fließt das fluide Medium im ersten Temperierkanal 50 zum ersten Temperiermittelablauf 74. Die Strömungselemente 32 sind im ersten Temperierkreis 70 vorzugsweise mäanderförmig ausgestaltet. Die Kernspitze 16 des Innenkerns 10 kann plan, zentrisch oder exzentrisch, mit oder ohne Bohrung in der Spitze ausgeführt sein. Vorzugsweise weist die Kernspitze 16 des Innenkerns 10 einen Werkstoff mit hoher Festigkeit und hoher Verschleißbeständigkeit, insbesondere einen hochwertigen Werkzeugstahl auf. Der Figur 6b ist zu entnehmen, dass der erste Temperiermittelzulauf 72, die zentrale Bohrung 95 und der erste Temperiermittelablauf 74 im Wesentlichen auf einer Linie ausgebildet sind.

Der Innenkern 10 hat einen ersten Funktionsbereich 20, einen zweiten Funktionsbereich 30 und einen dritten Funktionsbereich 40. Der Außenkern 110 umfasst einen ersten Funktionsbereich 120, einen zweiten Funktionsbereich 130 und einen dritten Funktionsbereich 140. Wenigstens zwei Funktionsbereiche weisen unterschiedliche Werkstoffe auf. Vorzugsweise umfassen der erste Funktionsbereich 20 des Innenkerns 10 und der erste Funktionsbereich 120 des Außenkerns 110 einen Werkstoff, der eine hohe Festigkeit aufweist. Bevorzugter Weise umfassen der zweite Funktionsbereich 30 des Innenkerns 10 und der zweite Funktionsbereich 130 des Außenkerns 110 einen Werkstoff mit einer hohen Warmfestigkeit. Vorteilhafter Weise umfassen der dritte Funktionsbereich 40 des Innenkerns 10 und der dritte Funktionsbereich 140 des Außenkerns 110 einen Werkstoff mit einer hohen Wärmeleitfähigkeit. In den Figuren 6a und 6c wurden die unterschiedlichen Werkstoffe nicht mit unterschiedlichen Schraffuren hervorgehoben.

Die Strömungselemente 32 sind zwischen der Außenfläche 34 des Innenkerns 10 und zwischen der Innenfläche 112 des Außenkerns 110 fest angeordnet. Die Strömungselemente 32 können in einer bevorzugten Ausführungsform axial verschiebbar und/oder radial verstellbar zum Erzeugen einer turbulenten Strömung ausgestaltet sein.

In Figur 6a ist beispielhaft die Länge L eines Formhohlraumes 400 mit den Bezugszeichen 402 und 404 dargestellt. Der Durchmesser D des Formhohlraumes 400 ist mittels der Bezugszeichen 406 und 408 illustriert. Der Formhohlraum 400 ist mittels einer gestrichelten Linie angedeutet.

In Figur 6c ist eine um 90° gedrehte Schnittansicht des in Figur 6a dargestellten bevorzugten Ausführungsbeispiels und in Figur 6d ist ein Querschnitt nach Figur 6c entlang der Linie B-B dargestellt. Gleiche Bauteile weisen gleiche Bezugszeichen auf.

Der zweite Temperierkreis 80 hat einen zweiten Temperiermittelzulauf 82, einen zweiten Temperierkanal 60 und einen zweiten Temperiermittelablauf 84. Ein fluides Medium fließt durch den zweiten Temperiermittelzulauf 82 in den zweiten Temperierkanal 60 zum zweiten Temperierkreis 80. Die Strömungselemente 32 lenken das fluide Medium um, wodurch eine turbulente Strömung erzeugt wird und fließt durch den zweiten Temperierkanal 60 zum zweiten Temperiermittelablauf 84.

In Figur 6c ist beispielhaft eine Fügelinie der unterschiedlichen Werkstoffe mit dem Bezugszeichen 38 dargestellt. Sowohl der Innenkern 10 als auch der Außenkern 110 umfassen wenigstens zwei unterschiedliche Werkstoffe.

Wie dem in Figur 6d dargestellten Querschnitt zu entnehmen ist, liegen der erste Temperiermittelzulauf 72, die zentrale Bohrung 95 und der erste Temperiermittelablauf 74 im Wesentlichen auf einer Linie. Ferner liegen der zweite Temperiermittelzulauf 82, die zentrale Bohrung 95 und der zweite Temperiermittelablauf 84 im Wesentlichen auf einer Linie.

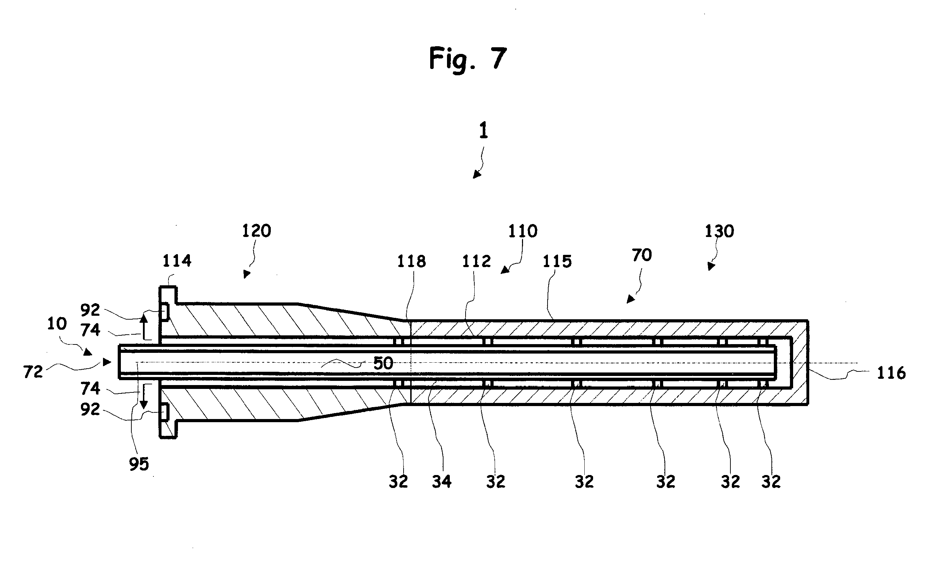

In Figur 7 ist eine Schnittansicht eines weiteren bevorzugten Ausführungsbeispiels eines Formkerns der vorliegenden Erfindung dargestellt. Gleiche Bauteile weisen gleiche Bezugszeichen auf.

Der Formkern 1 hat einen Innenkern 10 und einen Außenkern 110. Bei dieser bevorzugten Ausführungsform ist kein zentraler Auswerfer vorgesehen. In Figur 7 ist der erste Temperierkreis 70 dargestellt, der einen ersten Temperiermittelzulauf 72, einen ersten Temperierkanal 50 und zwei Temperiermittelabläufe 74 aufweist. Zwischen der Außenfläche 34 des Innenkerns 10 und der Innenfläche 112 des Außenkerns 110 sind Strömungselemente 32 ausgebildet.

Findet der Formkern 1 beispielsweise in einem Spritzguss-Werkzeug Einsatz, dann umfasst der Innenkern 10 als Werkstoff einen Werkzeugstahl. Der Außenkern 110 umfasst bevorzugter Weise zwei Werkstoffe mit zwei Funktionsbereichen 120, 130, wobei der erste Werkstoff bzw. der erste Funktionsbereich 120 Werkzeugstahl und der zweite Werkstoff bzw. der zweite Funktionsbereich 130 eine Kupferlegierung umfasst.

Für den Fall, dass der Formkern 1 in einem Druckguss-Werkzeug verwendet wird, umfasst der Innenkern 10 als Werkstoff eine Kupferlegierung. Der Außenkern 110 weist bevorzugter Weise zwei Werkstoffe mit zwei Funktionsbereichen 120, 130 auf. Der erste Werkstoff bzw. der erste Funktionsbereich 120 umfasst eine Kupferlegierung und der zweite Werkstoff bzw. zweite Funktionsbereich 130 umfasst einen Warmarbeitsstahl. Beispielhaft ist eine Fügelinie der unterschiedlichen Werkstoffe mit dem Bezugszeichen 118 dargestellt.

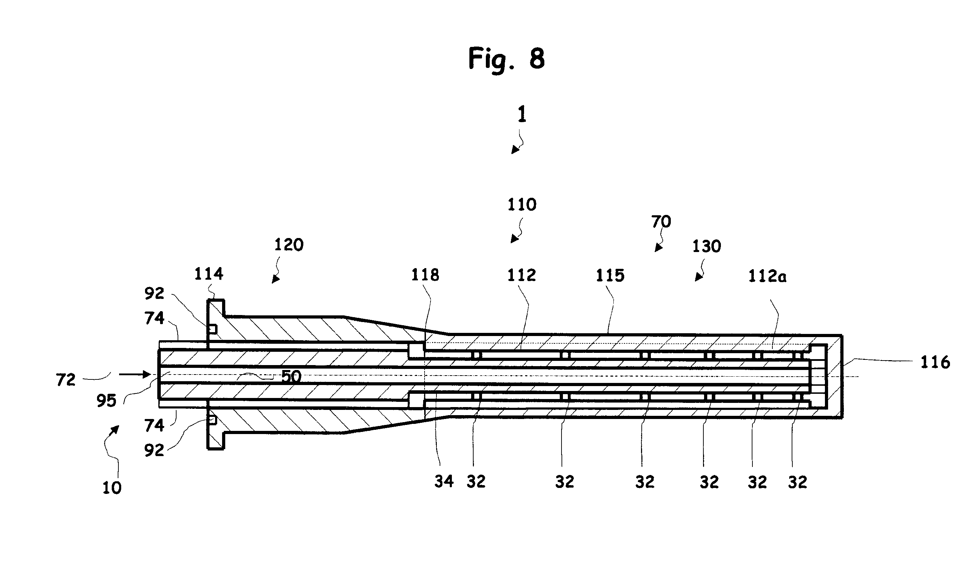

In Figur 8 ist eine Schnittansicht eines weiteren bevorzugten Ausführungsbeispiels eines Formkerns der vorliegenden Erfindung dargestellt. Gleiche Bauteile weisen gleiche Bezugszeichen auf.

Der in Figur 8 dargestellte Formkern 1 wird beispielsweise in einem Druckguss-Werkzeug eingesetzt. Der Formkern 1 weist einen Innenkern 10 und einen Außenkern 110 auf. Der Innenkern 10 umfasst als Werkstoff einen Werkzeugstahl und der Außenkern 110 umfasst zwei Werkstoffe mit zwei Funktionsbereichen 120, 130. Der erste Werkstoff umfasst einen Werkzeugstahl und der zweite Werkstoff umfasst einen Warmarbeitsstahl.

Der Fachmann erkennt, dass je nach Anforderung andere Werkstoffe zweckmäßig eingesetzt werden können.

In einem alternativen bevorzugten Ausführungsbeispiel eines Formkerns 1 nach Figur 8 umfasst der Werkstoff des Innenkerns 10 eine Kupferlegierung und der erste Werkstoff des Außenkerns 110 eine Kupferlegierung und der zweite Werkstoff des Außenkerns 110 einen Warmarbeitsstahl. Beispielhaft ist eine Fügelinie der unterschiedlichen Werkstoffe mit dem Bezugszeichen 118 dargestellt.

Vorzugsweise weist der Außenkern 110 im Bereich der Innenfläche 112 einen profilierten Querschnitt 112a, beispielsweise einen sternförmigen, keilförmigen, trapezförmigen, wellenförmigen Querschnitt auf, wodurch insbesondere im Falle einer dünnwandigen Ausführung eine höhere Stabilität und eine zusätzliche Temperierfläche bereitgestellt werden kann.

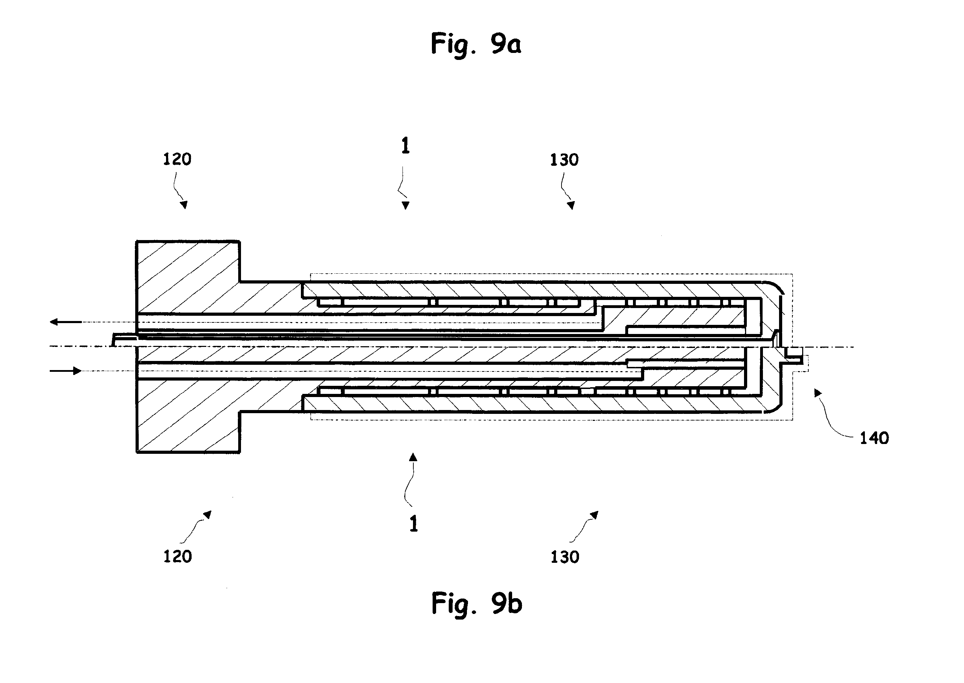

In Figur 9a ist eine teilweise Schnittansicht eines weiteren bevorzugten Ausführungsbeispiels eines Formkerns 1 der vorliegenden Erfindung mit einem zentralen Auswerfer und zwei Funktionsbereichen 120, 130 dargestellt. Figur 9b zeigt eine teilweise Schnittansicht eines weiteren bevorzugten Ausführungsbeispiels eines Formkerns 1 der vorliegenden Erfindung ohne zentralen Auswerfer mit drei Funktionsbereichen 120, 130, 140. Gleiche Bauteile weisen gleiche Bezugszeichen auf.

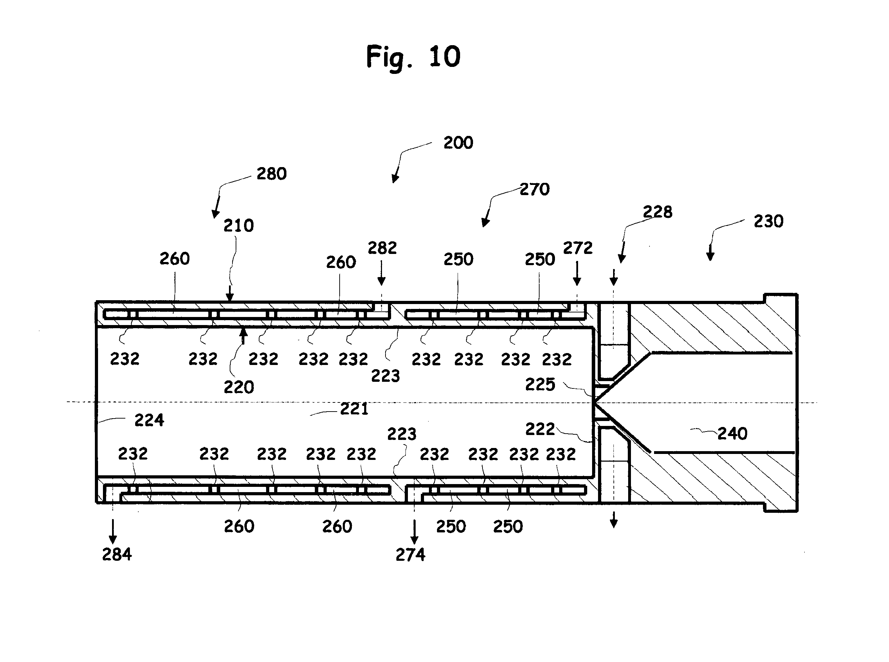

In Figur 10 ist eine Schnittansicht eines bevorzugten Ausführungsbeispiels eines Formeinsatzes 200 der vorliegenden Erfindung dargestellt. Gleiche Bauteile weisen gleiche Bezugszeichen auf.

Der Formeinsatz 200 dient zum Formen von äußeren Konturen von länglichen und schmalen Formteilen und umfasst eine Außenfläche 210 und eine Innenfläche 220. Die Innenfläche 220 hat einen Hohlraum 221, der einen Boden 222, eine Seitenfläche 223 und eine Öffnung 224, die gegenüber dem Boden 222 vorgesehen ist, aufweist. Zwischen der Außenfläche 210 und der Innenfläche 220 ist in Längsrichtung ein erster Temperierkreis 270 ausgebildet. Der erste Temperierkreis 270 hat einen ersten Temperiermittelzulauf 272, einen ersten Temperierkanal 250 zum Transport eines fluiden Mediums bzw. eines Temperiermittels zur Wärmeabfuhr und/oder Wärmezufuhr und einen ersten Temperiermittelablauf 274. Im ersten Temperierkanal 250 sind Strömungselemente 232 fest angeordnet. Die Strömungselemente 232 können im ersten Temperierkanal 250 aber auch axial verschiebbar und/oder radial verstellbar ausgebildet sein. Die Strömungselemente 232 erzeugen im ersten Temperierkanal 250 eine turbulente Strömung.

Ein zweiter Temperierkreis 280 ist zwischen der Außenfläche 210 und der Innenfläche 220, angrenzend an den ersten Temperierkreis 270, ausgebildet. Der zweite Temperierkreis 280 hat einen zweiten Temperiermittelzulauf 282, einen zweiten Temperierkanal 260 und einen zweiten Temperiermittelablauf 284. Das fluide Medium fließt durch den zweiten Temperiermittelzulauf 282 durch den zweiten Temperierkanal 260. Die Strömungselemente 232 lenken das fluide Medium um, erzeugen eine turbulente Strömung und das fluide Medium strömt in Richtung des zweiten Temperiermittelablaufs 284. Die Strömungselemente 232 sind im zweiten Temperierkanal 260 fest angeordnet, können aber auch axial verschiebbar und/oder radial verstellbar ausgebildet sein. Die Strömungselemente 232 erzeugen im zweiten Temperierkanal 250 des zweiten Temperierkreises 280 eine turbulente Strömung. Der erste Temperierkreis 270 und der zweite Temperierkreis 280 sind unabhängig voneinander temperierbar.

Der Formeinsatz 200 umfasst bevorzugter Weise wenigstens zwei unterschiedliche Werkstoffe. Der Boden 222 aus einer hochwertigen Kupferlegierung weist einen Angussbereich 225 auf, der einen Werkstoff mit hoher Festigkeit, insbesondere Werkzeugstahl, umfasst. Die Seitenfläche 223 weist zumindest teilweise einen Werkstoff mit einer hohen Wärmeleitfähigkeit, insbesondere Kupfer oder eine Kupferlegierung, auf.

Eine Vorkammerbuchse 230 ist angrenzend an den Boden 222 ausgebildet. Eine Heißkanaldüse 240 steht mit dem Angussbereich 225 in Eingriff. Eine Kühlmitteleinrichtung 228 ist im Angussbereich 225 zur Wärmeabfuhr, insbesondere von Friktionswärme, vorgesehen. Der Fachmann erkennt, dass der Formkern und die Vorkammerbuchse 230 getrennt ausgestaltet werden können.

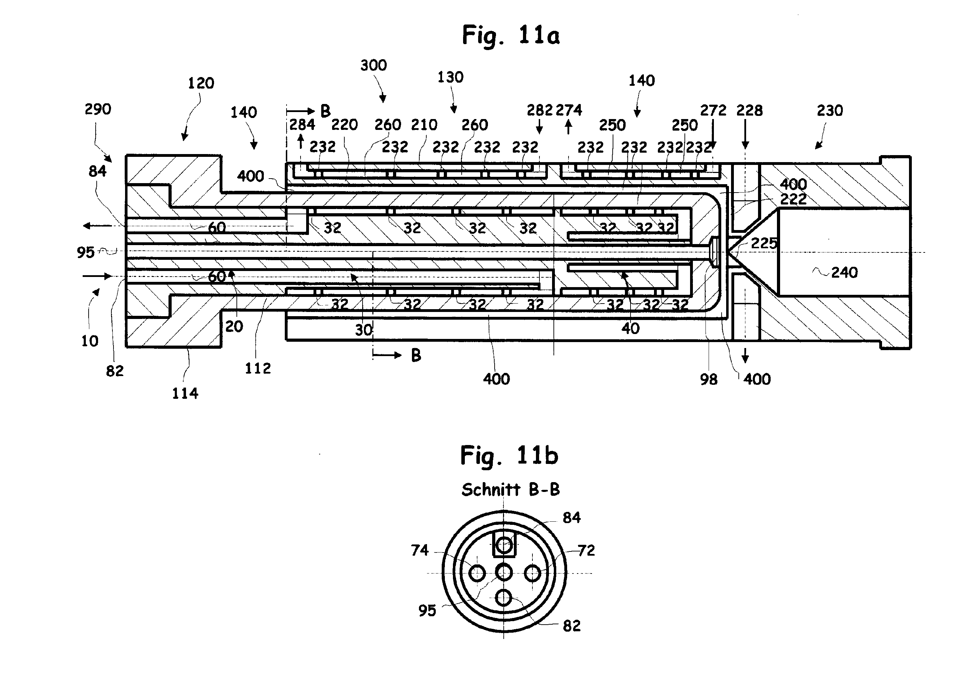

Figur 11a zeigt eine Schnittansicht eines bevorzugten Ausführungsbeispiels eines Formwerkzeuges 300 der vorliegenden Erfindung und Figur 11b zeigt einen Querschnitt des bevorzugten Ausführungsbeispiels nach Figur 11a entlang der Linie B-B. Gleiche Bauteile weisen gleiche Bezugszeichen auf.

Das Formwerkzeug 300 dient zur Fertigung von Formteilen mittels eines Spritzguss- oder Druckgussverfahrens. Das Formwerkzeug 300 umfasst einen erfindungsgemäßen Formkern 1 und einen erfindungsgemäßen Formeinsatz 200. Der Formkern 1 und der Formeinsatz 200 sind relativ zueinander beweglich und bilden im geschlossenen Zustand einen Formhohlraum 400 für ein Formteil aus.

Der Formkern 1 hat einen Innenkern 10 und einen Außenkern 110. Der Innenkern 10 umfasst einen ersten Temperierkreis 70 (in Figur 11a nicht zu erkennen) und einen zweiten Temperierkreis 80. Der erste Temperierkreis 70 des Formkerns 1 entspricht beispielsweise dem in Figur 6a dargestellten ersten Temperierkreis 70. Der zweite Temperierkreis 80 des Formkerns 1 hat einen zweiten Temperiermittelzulauf 82, einen zweiten Temperierkanal 60 und einen zweiten Temperiermittelablauf 84. Das fluide Medium strömt durch den zweiten Temperierkanal 60, wird mittels der Strömungselemente 32, die innerhalb des zweiten Temperierkanals 60 angeordnet sind, zum Erzeugen einer turbulenten Strömung umgelenkt und fließt zum zweiten Temperiermittelablauf 84. Der erste Temperierkreis 70 und der zweite Temperierkreis 80 des Formkerns 1 sind voneinander unabhängig temperierbar. Sowohl der Innenkern 10 des Formkerns 1 als auch der Außenkern 110 des Formkerns 1 umfassen wenigstens zwei unterschiedliche Werkstoffe. Der Innenkern 10 umfasst einen ersten Funktionsbereich 20, einen zweiten Funktionsbereich 30, der an den ersten Funktionsbereich 20 angrenzt, und einen dritten Funktionsbereich 40, der an den zweiten Funktionsbereich 30 angrenzt. Die unterschiedlichen Funktionsbereiche 20, 30, 40 weisen vorzugsweise unterschiedliche Werkstoffe auf. Der erste Funktionsbereich 20 umfasst beispielsweise einen Werkstoff mit einer hohen Festigkeit, der zweite Funktionsbereich 30 umfasst insbesondere einen Werkstoff mit einer hohen Warmfestigkeit und der dritte Funktionsbereich 40 umfasst insbesondere einen Werkstoff mit einer hohen Wärmeleitfestigkeit. Der Außenkern 110 weist einen ersten Funktionsbereich 120, einen zweiten Funktionsbereich 130, der an den ersten Funktionsbereich 120 angrenzt, und einen dritten Funktionsbereich 140 auf, der an den zweiten Funktionsbereich 130 angrenzt. Der erste Funktionsbereich 120 des Außenkerns 110 umfasst vorzugsweise einen Werkstoff mit hoher Festigkeit, der zweite Funktionsbereich 130 des Außenkerns 110 umfasst insbesondere einen Werkstoff mit einer hohen Warmfestigkeit und der dritte Funktionsbereich 140 des Außenkerns 110 umfasst insbesondere einen Werkstoff mit einer hohen Wärmeleitfähigkeit.

Der Formeinsatz 200 umfasst einen ersten Temperierkreis 270 und einen zweiten Temperierkreis 280. Der erste Temperierkreis 270 des Formeinsatzes 200 hat einen ersten Temperiermittelzulauf 272, einen ersten Temperierkanal 250 und einen ersten Temperiermittelablauf 274. Im ersten Temperierkanal 250 sind Strömungselemente 232 zum Erzeugen einer turbulenten Strömung angeordnet. Der zweite Temperierkanal 280 des Formeinsatzes 200 hat einen zweiten Temperiermittelzulauf 282, einen zweiten Temperierkanal 260, in dem Strömungselemente 232 zum Erzeugen einer turbulenten Strömung angeordnet sind, und einen zweiten Temperiermittelablauf 284. Der erste Temperierkreis 270 und der zweite Temperierkreis 280 des Formeinsatzes 200 sind voneinander unabhängig temperierbar. Der Formeinsatz 200 umfasst wenigstens zwei unterschiedliche Werkstoffe. Die Seitenfläche 223 weist zumindest teilweise einen Werkstoff mit einer hohen Wärmeleitfähigkeit, insbesondere Kupfer oder eine Kupferlegierung auf. Der Boden 222 umfasst einen Werkstoff mit einer hohen Festigkeit, insbesondere Werkzeugstahl.

## Patentansprüche

1. Formkern (1) zum Formen von inneren Konturen von Formteilen, geeignet für ein Formwerkzeug, umfassend einen Innenkern (10) und einen Außenkern (110), die miteinander verbindbar sind, Strömungselemente (32), die zwischen dem Innenkern (10) und dem Außenkern (110) zum Ausbilden eines ersten Temperierkreises (70) anordenbar sind, der erste Temperierkreis (70) einen ersten Temperierkanal (50) zum Transport eines fluiden Mediums zur Wärmeabfuhr und/oder Wärmezufuhr aufweist.

2. Formkern (1) nach Anspruch 1, **dadurch gekennzeichnet, dass** zumindest ein zweiter Temperierkanal (60) zum Transport eines fluiden Mediums zur Wärmeabfuhr und/oder Wärmezufuhr vorgesehen ist, der mit zumindest einem zweiten Temperierkreis (80) in Verbindung steht.

3. Formkern (1) nach Anspruch 1 oder 2, **dadurch gekennzeichnet, dass** die Strömungselemente (32) axial verschiebbar und/oder radial verstellbar sind.

4. Formkern (1) nach Anspruch 1 oder 2, **dadurch gekennzeichnet, dass** sich im Verlauf von einem ersten Temperiermittelzulauf (72) zu einem ersten Temperiermittelablauf (74) der Querschnitt des ersten Temperierkanals (50) zum Erzeugen einer turbulenten Strömung ändert und/oder sich im Verlauf von zumindest einem zweiten Temperiermittelzulauf (82) zu zumindest einem zweiten Temperiermittelablauf (84) der Querschnitt des zumindest zweiten Temperierkanals (60) zum Erzeugen einer turbulenten Strömung ändert.

5. Formkern (1) nach einem der vorherigen Ansprüche, **dadurch gekennzeichnet, dass** der erste Temperierkreis (70) unabhängig vom zumindest zweiten Temperierkreis (80) temperierbar ist.

6. Formkern (1) nach einem der vorherigen Ansprüche, **dadurch gekennzeichnet, dass** der Innenkern (10) wenigstens zwei unterschiedliche Werkstoffe umfasst, die einen ersten Funktionsbereich (20) und zumindest einen zweiten Funktionsbereich (30) ausbilden.

7. Formkern (1) nach einem der vorherigen Ansprüche, **dadurch gekennzeichnet, dass** der Außenkern (110) wenigstens zwei unterschiedliche Werkstoffe umfasst, die einen ersten Funktionsbereich (120) und zumindest einen zweiten Funktionsbereich (130) ausbilden.

8. Formkern (1) nach einem der vorherigen Ansprüche, **dadurch gekennzeichnet, dass** zwei unterschiedliche Werkstoffe mittels einer Fügetechnologie, insbesondere Laserstrahlschweißen oder Elektronenstrahlschweißen, verbunden sind.

9. Formeinsatz (200) zum Formen von äußeren Konturen von Formteilen, geeignet für ein Formwerkzeug umfassend eine Außenfläche (210), eine Innenfläche (220) mit einem Hohlraum (221), der einen Boden (222), eine Seitenfläche (223) und eine Öffnung (224), die gegenüber dem Boden (222) vorgesehen ist, aufweist, wobei zwischen der Außenfläche (210) und der Innenfläche (220) in Längsrichtung ein erster Temperierkreis (270) ausgebildet ist, der einen ersten Temperiermittelzulauf (272), einen ersten Temperierkanal (250) zum Transport eines fluiden Mediums zur Wärmeabfuhr und/oder Wärmezufuhr, Strömungselemente (232) und einen ersten Temperiermittelablauf (274) umfasst.

10. Formeinsatz (200) nach Anspruch 9, **dadurch gekennzeichnet, dass** zwischen der Außenfläche (210) und der Innenfläche (220) zumindest ein zweiter Temperierkreis (280), der an den ersten Temperierkreis (270) angrenzt, ausgebildet ist, der zumindest zweite Temperierkreis (280) zumindest einen zweiten Temperiermittelzulauf (282), zumindest einen zweiten Temperierkanal (260) zum Transport eines fluiden Mediums zur Wärmeabfuhr und/oder Wärmezufuhr, Strömungselemente (232) und zumindest einen zweiten Temperiermittelablauf (284) umfasst.

11. Formeinsatz (200) nach Anspruch 9 oder 10, **dadurch gekennzeichnet, dass** der erste Temperierkreis (270) unabhängig vom zumindest zweiten Temperierkreis (280) temperierbar ist.

12. Formeinsatz (200) nach einem der Ansprüche 9 bis 11, **dadurch gekennzeichnet, dass** sich im Verlauf vom ersten Temperiermittelzulauf (272) zum ersten Temperiermittelablauf (274) der Querschnitt des ersten Temperierkanals (250) zum Erzeugen einer turbulenten Strömung ändert und/oder sich im Verlauf vom zumindest zweiten Temperiermittelzulauf (282) zum zumindest zweiten Temperiermittelablauf (284) der Querschnitt des zumindest zweiten Temperierkanals (260) zum Erzeugen einer turbulenten Strömung ändert.

13. Formeinsatz (200) nach Anspruch 9 oder 10, **dadurch gekennzeichnet, dass** die Strömungselemente (232) axial verschiebbar und/oder radial verstellbar sind.

14. Formeinsatz (200) nach Anspruch 9, **dadurch gekennzeichnet, dass** die Seitenfläche (223) einen Werkstoff mit hoher Wärmeleitfähigkeit, insbesondere Kupfer oder eine Kupferlegierung, umfasst, und dass der Boden (222), der eine Kupferlegierung umfasst, einen Angussbereich (225) aufweist, der einen Werkstoff mit hoher Festigkeit, insbesondere Werkzeugstahl, umfasst.

15. Formwerkzeug (300) zur Fertigung von Formteilen, umfassend einen Formkern (1) nach einem der Ansprüche 1 bis 8, einen Formeinsatz (200) nach einem der Ansprüche 9 bis 14, wobei der Formkern (1) und der Formeinsatz (200) relativ zueinander beweglich sind und im geschlossenen Zustand einen Formhohlraum (400) für ein Formteil ausbilden.
